Europäisches Patentamt

European Patent Office

Office européen des brevets

(11) Publication number: **0 436 932 A2**

# EUROPEAN PATENT APPLICATION

(21) Application number: **90125547.1**

(22) Date of filing: **27.12.90**

(51) Int. Cl.⁵: **H04L 12/42**

(30) Priority: **08.01.90 JP 1292/90**

(43) Date of publication of application:
**17.07.91 Bulletin 91/29**

(84) Designated Contracting States:
**DE FR SE**

(71) Applicant: **MITSUBISHI DENKI KABUSHIKI KAISHA**
**2-3, Marunouchi 2-chome Chiyoda-ku**
**Tokyo 100(JP)**

(72) Inventor: **Handa, Masanori, Mitsubishi Denki**
**Mekatoronikusu**
**Sofutouea K. K., 1-14, Yadaminami 5-chome**
**Higashi-ku, Nagoya-shi, Aichi(JP)**

(74) Representative: **Sajda, Wolf E., Dipl.-Phys. et al**
**MEISSNER, BOLTE & PARTNER**
**Widenmayerstrasse 48 Postfach 86 06 24**
**W-8000 München 86(DE)**

(54) A loop data link system and a station number setting method.

(57) A method of assigning station numbers to loop-connected slave stations (2a,2b,2c) comprises allowing the slave stations (2a,2b,2c) to calculate their own numbers from data (8,11) received from the loop. Each slave station (2a,2b,2c) operates on the data (8,11) in such a way that an incremented data value is transmitted to the next slave station (2a,2b,2c) in the loop before being returned to a master station (1).

FIG. 1

## A LOOP DATA LINK SYSTEM AND A STATION NUMBER SETTING METHOD

The present invention relates to a method of assigning station numbers to slave stations from a master station in a loop data link system by the transmission of serial data and a system configured to operate the method.

It is well known to configure a loop data link system of programmable controllers (hereinafter referred to as "PCs") where information is transferred between master and slave stations via the transmission of serial data.

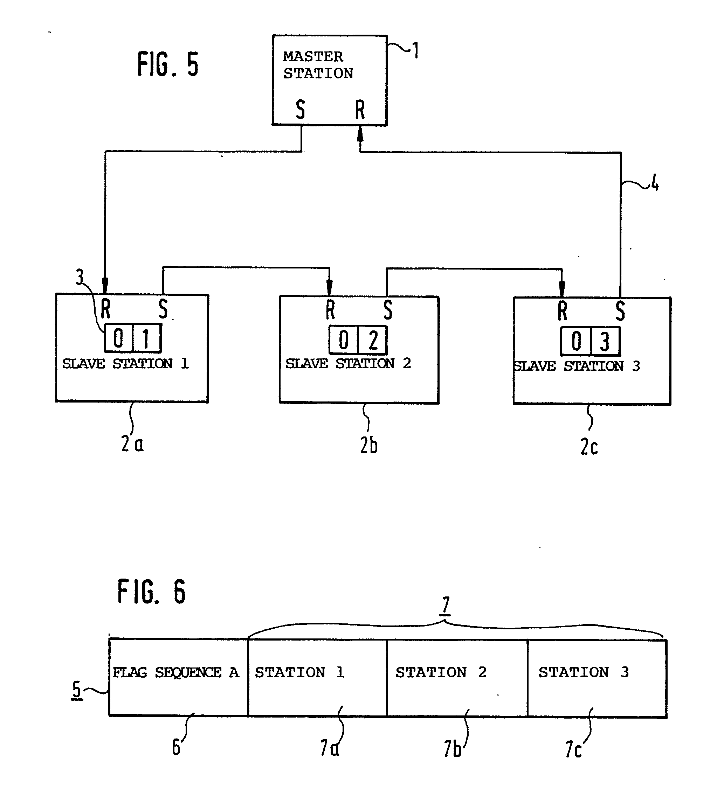

Fig. 5 is a block diagram illustrating a loop data link system of the prior art configured using PCs. In Fig. 5, a master station 1 is connected to slave stations 2a to 2c acting as remote stations , which are all PCs. At 3 are station number setting devices for assigning station numbers to the slave stations 2a to 2c, and at 4 are link cables for connecting the master station 1 and the slave stations 2a to 2c in a loop through sending ports S and subsequent stations' receiving ports R.

Fig. 6 illustrates a serial data transmission frame sent by the master station 1 in the prior art loop data link system, for transferring serial data between the master station 1 and the slave stations 2a to 2c. Referring to Fig. 6, 5 indicates a serial data transmission frame for communicating the information ; 6 a flag sequence heading the serial data transmission frame 5 and containing a set fixed bit pattern (hereinafter referred to as "flag sequence A") which indicates the type of transmission frame; 7 an information section comprising data parts 7a to 7c provided in correspondence with the slave stations 2a to 2c and configured as a predetermined number of bits, for storing the data to be transferred.

The operation of this system will now be described. In Fig. 5, before initiating data transfer between the master station 1 and the slave stations 2a to 2c, the station numbers should be assigned to the station number setting devices 3, for example, 01 to the slave station 2a and 02 to the slave station 2b etc. This is essentially a manual operation. When data transfer is started, the master station 1 transmits a serial data frame 5. The slave station 2a first receives the serial data transmission frame 5, notes that the transmission frame is data information communicating serial data transmission frame 5 because the flag sequence part 6 includes the flag sequence A, reads data information from the master station 1 contained in the data block 7A corresponding to the slave station 2a, and further replaces the received block with data information to be sent to the master station before sending the data frame on to the next station. Similarly thereinafter, data information transfers are made at the slave stations 2b and 2c, and the serial data transmission frame 5 passes through the loop and is finally received back by the master station 1, which then reads the data information from the slave stations 2a to 2c inserted in the data parts 7a to 7c. In this way, the master station 1 and the slave stations 2a to 2c communicate with each other.

The prior art loop data link system station number setting method requires each slave station to have a station number setting device, since the setting of the numbers is essentially manual, resulting in relatively high slave station costs. Moreover, the system can easily malfunction due to accidental assignment of identical numbers to different stations.

It is, accordingly, an object of the present invention to overcome the disadvantages in the prior art by providing a loop data link system and a station number setting method which will automatically set the slave station numbers.

According to a first aspect of the present invention there is provided a method of setting station numbers in a loop data link system comprising a master station and a plurality of slave stations and characterised in that a station number setting serial data transmission frame is transmitted from the master station, which frame comprises a station number setting flag sequence and an information section containing slave station number setting data, the station number at a first of said slave stations is set in accordance with the station number setting data, the information section of said serial data transmission frame is modified at said first slave station by inserting information related to said set slave station number as new station number setting data, and in that the modified frame is transmitted to the next station.

According to a second aspect of the present invention there is provided a loop data link system comprising a master station and a plurality of slave stations in which the station numbers are set by the transmission of a serial data transmission frame from the master station, and which is characterised in that the frame comprises a station number setting flag sequence and an information section containing slave station number setting data, and in that the station number at a first of said slave stations can be set in accordance with the station number setting data, the information section of said serial data transmission frame can be modified at said first slave station by inserting information related to the set slave station number as new station number setting data, and the modified frame can be transmitted to the next station.

In the invention, the serial data transmission frame consisting of the station number setting flag sequence and the information section containing slave station number setting data information is transmitted by the master station when the loop data link system is started up. The serial data transmission frame is received by the first of the said slave stations and the first slave station number is set in accordance with the said station number setting data. In addition, information relating to the said set slave station number is stored in the information section of the serial data transmission frame as new station number setting data before the frame is transmitted to the next station.

The present invention will now be described by way of example with reference to the accompanying drawings, in which:-

Fig. 1 is a diagram illustrating station number setting serial data transmission frames according to a loop data link system station number setting method of one embodiment of the present invention;

Fig. 2 is a flowchart illustrating the operation of the master station and slave stations in assigning station numbers to the slave stations by transmitting and retransmitting the station number setting serial data transmission frame shown in Fig.1;

Fig. 3 is a diagram illustrating station number setting serial data transmission frames according to another embodiment of the present invention;

Fig. 4 is a flowchart illustrating the operation of the master station and slave stations in setting station numbers to the slave stations according to the second embodiment;

Fig. 5 is a block diagram illustrating the general configuration of a loop data link system known in the prior art; and

Fig. 6 is a diagram illustrating a serial data transmission frame used for communicating data.

In the foregoing drawings, like reference characters designate like or corresponding parts in all the figures.

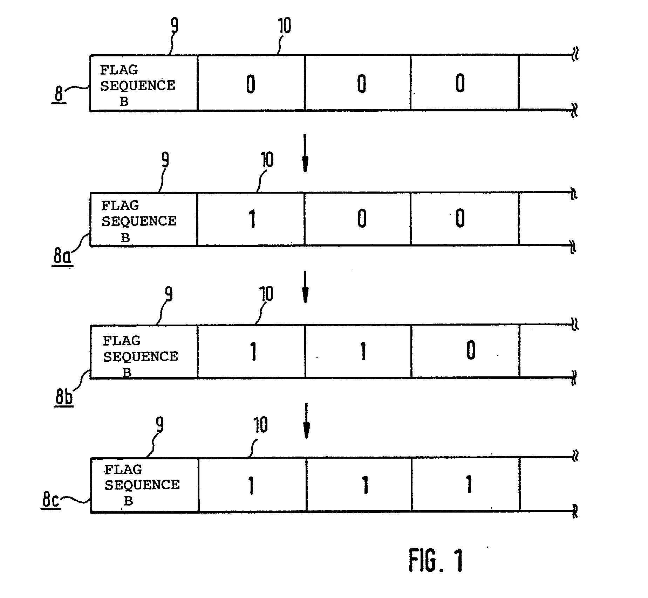

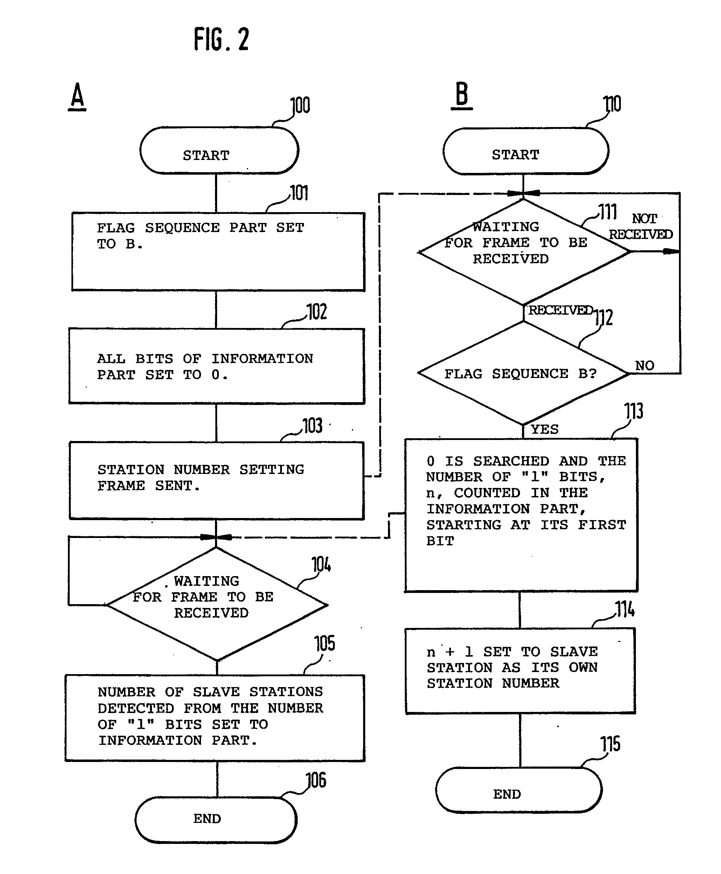

A first embodiment of the present invention will now be described by way of example and with reference to Figs. 1 and 2, wherein numerals identical to those already mentioned in the description of the prior art shown in Figs. 5 and 6 identify identical or corresponding parts. The configuration of the loop data link system of this embodiment is the same as that of the prior art illustrated in Fig. 5 and will not be described here.

Fig. 1 is a diagram illustrating how a station number setting serial data transmission frame sent by a master station 1 changes when it passes through each of the loop-connected slave stations 2a to 2c. In Fig. 1, the numeral 8 indicates a station number setting serial data transmission frame sent by the master station 1 and 8a to 8c indicate station number setting serial data transmission frames transmitted by the slave stations 2a to 2c, respectively. A flag sequence 9 containing a set fixed bit pattern (hereinafter referred to as "flag sequence B") indicates that the transmission frame is for station number setting. A station number assignment information section 10 consists of more bits than the maximum number of slave stations linked. Each bit is set to zero at the time of information transmission from the master station 1.

Fig. 2 is a flowchart illustrating the operation of the master station 1 and the slave stations 2a to 2c in setting station numbers in the slave stations 2a to 2c.

The operation of the system will now be described with reference to Fig. 1 and Fig. 2. In flowcharts A and B shown in Fig. 2, the master station 1 and the slave stations 2a to 2c start at steps 100 and 110 respectively. First, the master station 1 sets the flag sequence B in the flag sequence portion 9 of the station number setting serial data transmission frame 8 at step 101, then sets a "0" in all columns of the information portion 10 at step 102 and sends the frame to the slave station 2a from a sending port S via a link cable 4 at step 103.

The frame 8 sent by the master station 1 is received by the slave station 2a, which has been waiting for the transmission of that frame from the master station 1, at step 111. On receipt of the frame, the slave station 2a checks the flag sequence of the frame 8 at step 112. If the flag sequence B appears, the slave station 2a judges the received serial data as station number setting data and progresses to step 113, where it searches for a "0" and also counts the numbers of "1" bits, n, among the bits of the information portion 10, starting from the first bit. Since the slave station 2a is the first slave station and the first bit of the information portion is "0", $n = 0$. At step 113, the slave station 2a changes the first found "0" bit to a "1", i.e. sets "1" as the value of that bit, and sends the serial data transmission frame 8a including the altered information portion 10 to the next slave station 2b. At step 114, station 2a adds 1 to the counted number of "1" bits, n i.e. adds $(n + 1)$ and sets that value as its own station number. Since $n = 0$ at the first slave station, the station number of the slave station 2a is set to "1". At step 115, station number setting for station 2a is complete.

The operation shown in flowchart B is also performed at the slave stations 2b and 2c to assign station number "2" to the slave station 2b and "3" to slave station 2c.

If the slave station judges that the flag sequence B has not been set at step 112, it returns to step 111 and stands by.

The master station 1 receives the station number setting serial data transmission frame 8c sent by the slave station 2c at step 104 in flowchart A, checks the number of "1" bits, n, in the information portion 10 and here judges from n = 3 th at the number of stations connected is 3 (step 105). The series of station number setting operations terminates at step 106.

After completion of the station number setting operation, ordinary data information transfer is made between the master station 1 and the slave stations 2a to 2c as described for the prior art, i.e. the master station 1 changes the flag sequence 6 to flag sequence A, provides an information portion 7 in correspondence with the slave station arrangement and sends a serial data transmission frame 5 consisting of data sections 7a to 7c each made up of a predetermined number of bits, and finally receives the serial data transmission frame 5 after it has passed through the loop.

If a slave station is to be reserved for future expansion, it will be appreciated that the corresponding bit may be set to "1" instead of setting all bits of the information portion 10 to "0" in the station number setting frame sent by the master station 1.

It will also be appreciated that instead of setting all bits of the information portion 10 to "0" in the frame 0 sent by the master station 1, all the bits may be set to "1" and the bits changed to "0" at the slave station. The station numbers can be similarly set at each slave station through this action and the number of slave stations may be judged at the master station in accordance with the number of "0" bits, n.

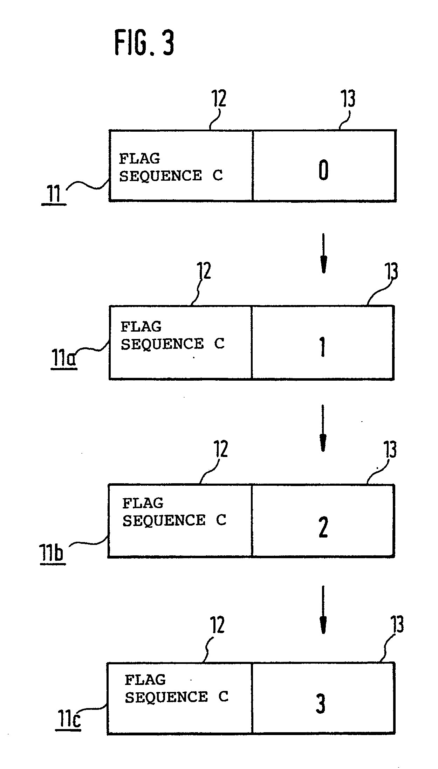

Fig. 3 is a diagram illustrating station number setting frames according to another embodiment of the present invention and indicating how a station number setting frame sent by the master station 1 changes when it passes through each of the slave stations 2a to 2c. Referring to Fig. 3, numeral 11 indicates the station number setting frame sent by the master station 1, and 11a to 11c indicate the station number setting serial data frames transmitted by the slave stations 2a to 2c, respectively. Each transmission frame consists of a flag sequence 12 containing a set fixed bit pattern (hereinafter referred to as "flag sequence C"), which indicates that the transmission frame is for station number setting, and a station number setting information section 13 consisting of a predetermined number of bits for storing numeric data.

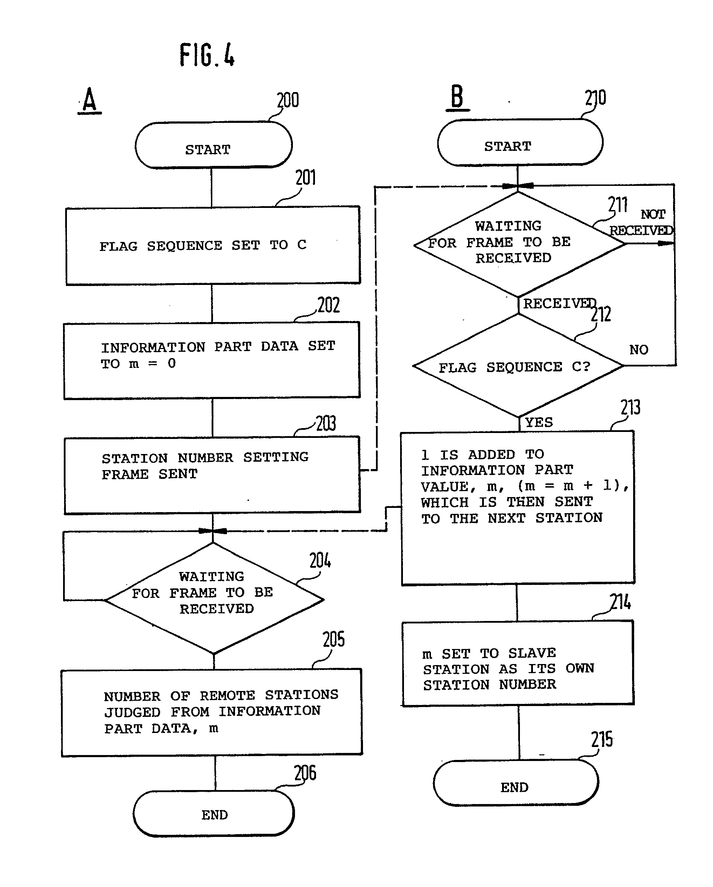

Fig. 4 is a flowchart illustrating the operations of the master station 1 and the slave stations 2a to 2c in sending the station number setting serial data transmission frame 11 shown in Fig. 3 from the master station 1 and setting up station numbers in the slave stations. The operation of the master station 1 and the slave stations 2a to 2c will be described with reference to Fig. 4.

In flowcharts A and B shown in Fig. 4, the master station 1 and the slave stations 2a to 2c start at steps 200 and 210 respectively. First, the master station 1 sets the flag sequence C as the flag sequence 12 at step 201, then sets numeric data "m = 0" in the information part 13 at step 202 and sends the station number setting serial data transmission frame 11 to the slave station 2a from sending port S via a link cable 4 at step 203.

On receiving the frame 11, the slave station 2a checks the flag sequence 12 of the frame at step 212. If the flag sequence C appears, the slave station judges the received frame as a station number setting frame 11 and progresses to step 213, where it adds "1" to the numeric data, m, i.e. (m = m + 1) to form new numeric data for the information portion 13. The frame 11a including the altered information is then sent to the next slave station 2b, and at step 214, station 2a sets its own station number to the new value of "m". At step 215, the station number setting operation is completed for slave station 2a. In this example, the station number of the slave station 2a is set to "1".

The operation shown in flowchart B is also performed at the slave stations 2b and 2c to set the station number "2" to slave station 2b and "3" to slave station 2c.

The master station 1 then receives the frame 11c sent by the slave station 2c at step 204 in flowchart A, checks the numeric data, m, in the information part 13, and judges from m = 3 that the number of stations connected is 3 at step 205, and terminates the station number setting operation at step 206.

After completion of the station number setting operation, ordinary data information transfer is made between the master station 1 and the slave stations 2a and 2c as described in the prior art.

If it is desired to reserve a station for future expansion, for example between the master station and the slave station 2a, it will be appreciated that the required number of additional stations may be added to the numeric value m at the outset instead of setting m to "0" in the frame 11 sent by the master station 1.

It will be apparent that the invention, as described above, achieves a station number setting method that will eliminate the need for station number setting devices in the slave stations, reduce the cost of the slave stations, and eliminate station number setting errors by allowing all slave station numbers to be set in accordance with the data in the frame transmitted by the master station in starting up the loop, which data is altered at the slave stations and inserted in the serial data frame as new station number setting data for the next station.

## Claims

1. A method of setting station numbers in a loop data link system comprising a master station (1) and a plurality of slave stations (2a,2b,2c) and characterised in that a station number setting serial data transmission frame (8,11) is transmitted from the master station (1), which frame (8,11) comprises a station number setting flag sequence (9,12) and an information section (10,13) containing slave station number setting data, the station number at a first of said slave stations (2a) is set in accordance with the station number setting data, the information section (10,13) of said serial data transmission frame is modified at said first slave station (2a) by inserting information related to said set slave station number as new station number setting data, and in that the modified frame (8,11) is transmitted to the next station (2b).

2. A method as claimed in Claim 1, characterised in that the master station (1) receives the serial data transmission frame (8,11) as modified by the last (2c) of the plurality of slave stations (2a,2b,2c) in the loop and determines from the data in the information section (10,13) the number of slave stations (2a,2b,2c) in the loop.

3. A method as claimed in Claim 1 or Claim 2, characterised in that the information section (10) comprises a sequence of binary values and the station number is set at each slave station (2a,2b,2c) by counting the number of leading bits of a given binary value and performing an arithmetic operation on the counted number.

4. A method as claimed in Claim 3, characterised in that the information section (10) is modified by replacing the first bit of a value opposite said given binary value with a bit of said given value.

5. A method as claimed in Claim 1 or Claim 2, characterised in that the information section (13 comprises a binary value representative of a numeric value, and in that the station number is set by performing an arithmetic operation on the binary value.

6. A method as claimed in Claim 5, characterised in that the information section (13) is modified by incrementing said numerical value by incrementation of the binary value.

7. A method as claimed in any one of Claims 1 to 6, characterised in that the number of bits comprising the information section (10,13) is as large as or larger than the number of slave stations (2a,2b,2c) connectible in said loop.

8. A loop data link system comprising a master station (1) and a plurality of slave stations (2a,2b,2c) in which the station numbers are set by the transmission of a serial data transmission frame (8,11) from the master station (1), and which is characterised in that the frame (8,11) comprises a station number setting flag sequence (9,12) and an information section (10,13) containing slave station number setting data, and in that the station number at a first of said slave stations (2a) can be set in accordance with the station number setting data (10,13), the information section (10,13) of said serial data transmission frame (8,11) can be modified at said first slave station (2a) by the insertion of information relating to said set slave station number as new station number setting data, and the modified frame (8,11) can be transmitted to the next station (2b).

9. A system as claimed in Claim 8, characterised in that the master station (1) can receive the serial data transmission frame (8,11) as modified by the last (2c) of the plurality of slave stations (2a,2b,2c) in the loop and can determine from the data in the information section (10,13) the number of slave stations (2a,2b,2c) in the loop.

10. A system as claimed in Claim 8 or Claim 9, characterised in that the information section (10) comprises a sequence of binary values and the station number can be set at each slave station (2a,2b,2c) by counting the number of leading bits of a given binary value and performing an arithmetic operation on the counted number.

11. A system as claimed in Claim 10, characterised in that the information section (10) can be modified by replacing the first bit of a value opposite said given binary value with a bit of said given value.

12. A system as claimed in Claim 8 or Claim 9, characterised in that the information section (13) comprises a binary value representative of a numeric value, and in that the station number can be set by performing an arithmetic operation on the binary value.

13. A system as claimed in Claim 12, characterised in that the information section (13) is modified by incrementing said numerical value by incrementation of the binary value.

14. A system as claimed in any one of Claims 8 to 13, characterised in that the number of bits comprising the information section (10,13)is as large as or larger than the number of slave stations (2a,2b,2c) connected in said loop.

FIG. 1

# FIG. 2

**A** — 100

START

101

FLAG SEQUENCE PART SET TO B.

102

ALL BITS OF INFORMATION PART SET TO 0.

103

STATION NUMBER SETTING FRAME SENT.

104

WAITING FOR FRAME TO BE RECEIVED

105

NUMBER OF SLAVE STATIONS DETECTED FROM THE NUMBER OF "1" BITS SET TO INFORMATION PART.

106

END

**B** — 110

START

111

WAITING FOR FRAME TO BE RECEIVED

NOT RECEIVED

RECEIVED

112

FLAG SEQUENCE B?

NO

YES

113

0 IS SEARCHED AND THE NUMBER OF "1" BITS, n, COUNTED IN THE INFORMATION PART, STARTING AT ITS FIRST BIT

114

n + 1 SET TO SLAVE STATION AS ITS OWN STATION NUMBER

115

END

# FIG. 3

# FIG.4

**A** 200

START

201

FLAG SEQUENCE SET TO C

202

INFORMATION PART DATA SET TO m = 0

203

STATION NUMBER SETTING FRAME SENT

204

WAITING FOR FRAME TO BE RECEIVED

205

NUMBER OF REMOTE STATIONS JUDGED FROM INFORMATION PART DATA, m

206

END

**B** 210

START

211 NOT RECEIVED

WAITING FOR FRAME TO BE RECEIVED

RECEIVED 212

FLAG SEQUENCE C?   NO

YES 213

1 IS ADDED TO INFORMATION PART VALUE, m, (m = m + 1), WHICH IS THEN SENT TO THE NEXT STATION

214

m SET TO SLAVE STATION AS ITS OWN STATION NUMBER

215

END

10

**FIG. 5**

**FIG. 6**